# EUROPEAN PATENT SPECIFICATION

(11) **EP 1 265 017 B1**
(45) Date of publication and mention of the grant of the patent: **12.09.2007**
(21) Application number: 01202187.9
(22) Date of filing: 07.06.2001
(51) Int. Cl.: F16L 1/19, B63B 35/03, B63B 27/12

(54) **Deepwater installation vessel**
Schiff zum Verlegen von Rohrleitungen in grosser Tiefe
Navire de pose de conduites à grandes profondeur

(43) Date of publication of application: 11.12.2002
(73) Proprietor: Sea of Solutions B.V., 3137 XB Vlaardingen (NL)
(72) Inventor: Lusthof, Jeroen, 2628 BD Delft (NL); Rietveldt, Bob, 3137 DH Vlaardingen (NL)
(74) Representative: van Westenbrugge, Andries

(56) References cited:
- US-A- 2 997 188
- US-A- 3 860 122
- US-A- 6 056 478

## Description

The invention relates to an installation vessel for deepwater comprising on its deck a lifting frame. US 2.997.188 discloses a vessel with at the fore part of the vessel a lifting frame, which is with a lower end in a hinge connection with the vessel. Moreover, US-A-3 860 122 discloses a vessel with a deck, a lifting frame with a hinge connection at its lower end, a drive element for hinging the frame between a first position substantially overlaying the deck to a second, upright position, a connector at the upper end of the lifting frame and a pipe-lay frame. Furthermore, it is known a J-lay vessel in which the J-lay tower can be transported in a horizontal position lying on the deck of the pipe-laying vessel and can at the installation site be erected into a vertically upright position. At the top of the J-lay tower a tension compensator for taking up length variations of the flexible piping is provided. The flexible piping in the known installation vessel is placed in a coil on a large diameter reel on the vessel.

It is an object of the present invention to provide an installation vessel of the above-referred type, which is versatile and can perform different installation operations including lifting and pipe laying.

It is a further object of the present invention to provide an installation vessel of the above-referred type, which can perform different installation operations at the same time, including simultaneously lifting and pipe laying

It is a further object of the present invention to provide a simplified installation vessel for lifting heavy loads during offshore installation.

Hereto the lifting frame of the vessel according to the present invention as defined by claim 1 is with its lower end in a hinge connection hingingly attached to the vessel, the vessel comprising a drive element for hinging the frame between a first position substantially overlying the deck and a second, upright position, a connector being provided at an upper end of the lifting frame, and a pipe-lay frame, which connector is attachable to said pipe-lay frame, which pipe-lay frame can be attached through the connector to the lifting frame in its first position, the pipe lay frame upon connection being placed substantially horizontally on the deck, whereafter the pipe-lay frame can be uprighted to a predetermined angle by placing the lifting frame in its second position.

The lifting frame, which is a A-type frame, can be used to pick up loads from the main deck of the vessel, such as drilling equipment, offshore structures, such as boys or anchoring equipment and can transfer these loads to other locations such as nearby vessels or offshore platforms. By connecting the lifting frame with its upper end to the horizontally placed J-lay tower, the lifting frame can be used to upright the J-lay tower to its desired angular position for pipe laying operations. Upon completion of the pipe laying operations, the J-lay tower can be disconnected from the lifting frame, which can thereafter be used for regular lifting purposes. Also, the lifting frame can be used for regular lifting purposes while the pipe lay tower (J-lay tower) remains connected to the lifting frame.

Positioning of the vessel can take place by operation of its dynamic positioning thrusters.

Besides the J-lay operations, the J-lay tower can also be used to deploy flexible pipes which are stored underneath the main deck or drill or riser pipes for well intervention activities.

In one embodiment the lifting frame comprises at least one guide arm, with a lower end connected to a hinge located at a distance from the hinge connection of the arm of the lifting frame, towards a bow of the vessel, and with an upper end that is displaceably received in a slide member connected to the arm of the lifting frame. By rotating the lifting frame around the hinge connection on deck, the guide arm slides through the slide member. The drive element for rotating the lifting frame may for instance comprise a cable and pulley system placed on the deck of the vessel. The slide member may be provided with braking means such as a hydraulically actuated clamp or a pinion drive that meshes with teeth on the guide arm for maintaining the lifting frame in a predetermined, accurately defined position.

In a further embodiment the connection between the J-lay tower and the lifting frame is not disconnectable. This has as an advantage that a frame is provided which can both carry out lifting functions and function as a pipe lay tower at the same time.

The J-lay tower may be provided with a hinging coupling member at the lower end thereof, which is located near the hinge connection of the lifting frame such that when raising its upper end, the J-lay tower will be placed in proximity to the lifting frame, substantially parallel thereto.

US 6.056.478 discloses a pipe-laying vessel having a levelwind assembly for (a.o.) guiding pipes from the ship into water.

An embodiment of an installation vessel according to the present invention will be described in detail with reference to the accompanying drawing. In the drawing:
Fig. 1-3 show a perspective rear, side and top view respectively of the installation vessel according to the present invention; and
Fig. 4 and 5 respectively show a side view and a plan view of the vessel according to Fig. 1-3.

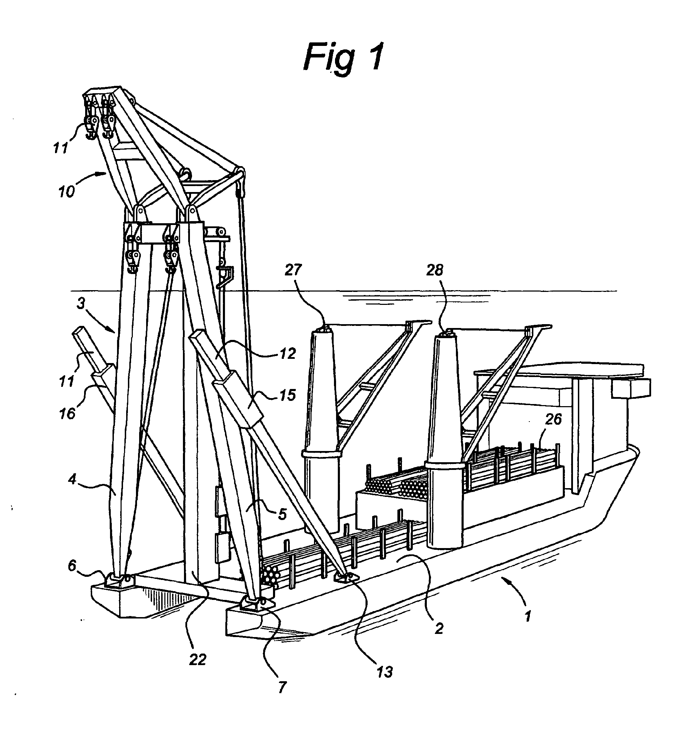

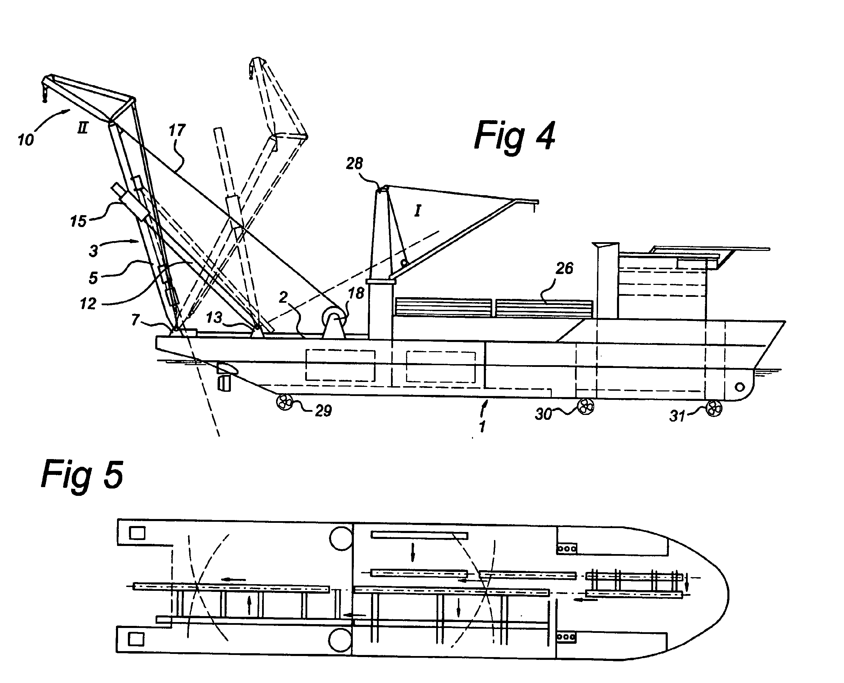

Fig. 1 shows an installation vessel 1 which is provided at its stern with a lifting frame 3, or sheerleg, mounted on the deck 2. The lifting frame 3 is an A-type frame comprising two arms 4, 5 at their lower ends connected to the deck 2 via hinge connections 6, 7. At the upper end of lifting frame 3 a jib 10 is provided comprising hoist blocks and cables 11. The lifting frame 3 is guided by two guide arms 11, 12 that are with their lower ends connected to hinges 13, 14 on the deck 2. The guide arms 11, 12 can slide through sleeves 15, 16 that are fixedly attached to the arms 4, 5 of the lifting frame 3. Via a drive means such as shown in Fig. 4, which may comprise a cable 17 connected to a winch 18 on the deck 2, the lifting frame 3 may be placed in a first position schematically indicated at I in Fig. 4 and substantially overlaying the deck 2 and in a second position shown in Fig. 1-3.

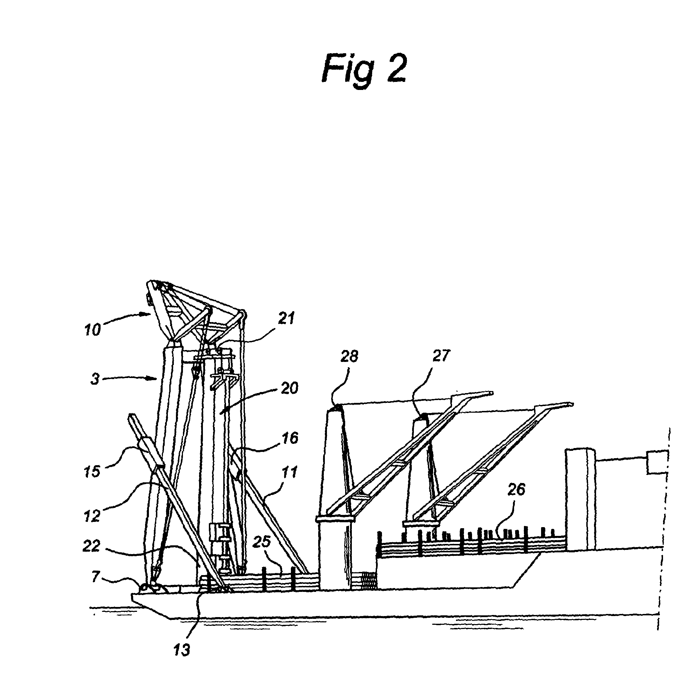

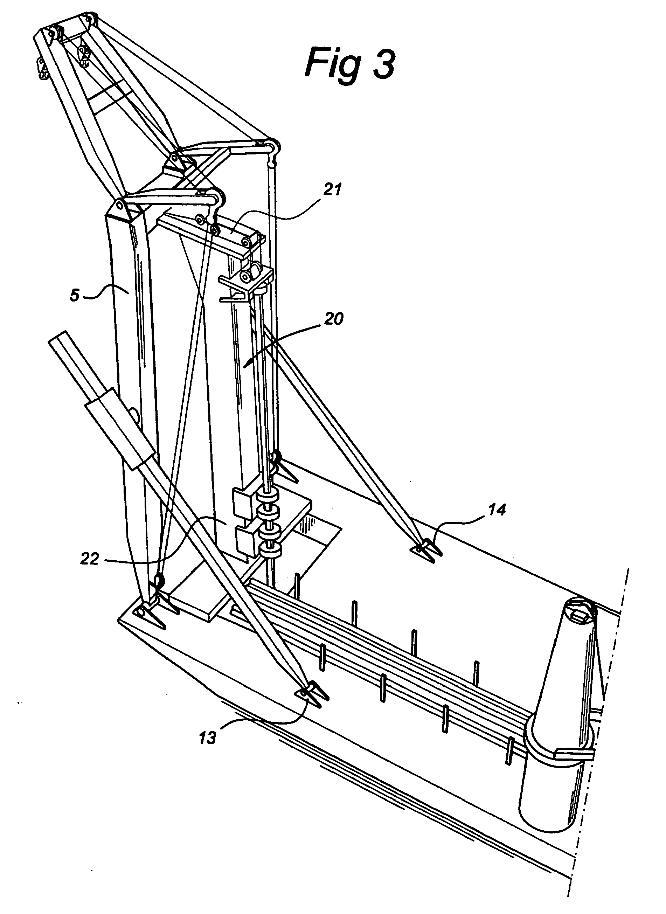

As can be seen in Fig. 2 and 3 a J-lay tower 20 is supported by the lifting frame 3. At its upper end, the J-lay tower 20 is provided with a hinging connector 21 which is attached to the upper part of the lifting frame 3 in its first position. In this position, the J-lay tower 20 is stowed on the deck 2 in a horizontal position with its lower part 22 extending to the rear of the vessel 1. When the lifting frame 3 is uprighted, the lower part 22 of the J-lay tower 20 remains in a fixed position whereas the upper part is lifted to the desired extent such that the required angle of the J-lay tower is obtained.

The piping is stowed on the deck 2 of the vessel in storage compartment 25, 26. The pipe sections are transported to the J-lay tower 20 by rotatable cranes 27, 28. As can be seen in Fig. 4, the vessel 1 comprises a number of freely rotatable thrusters 29, 30, 31 for positioning the vessel 1 and for station keeping during pipe laying.

In stead of a cable 17 and winch 18, the drive means for displacing the lifting frame 3 may also be comprised of a pinion drive on the inner part of sleeves 15, 16 with meshes with teeth on the outer surface of guide arms 11, 12. Alternatively, hydraulic actuators may be provided in the sleeves 15, 16 which may also serve for locking the position of the lifting frame 3.

The lifting frame 3 may also be used without the J-lay tower 20 for installation purposes, wherein maneuvering of the vessel is achieved by operation of the thrusters 29-31. The lifting frame 3 is very stable since no rotating parts around the vertical axis are provided. During lifting operations, the required orientation of the lifting frame 3 is obtained through positioning of the vessel 1.

## Claims

1. Installation vessel (1) comprising a deck (2) with at the stern a lifting frame (3) which is with a lower end in a hinge connection (6, 7) hingingly attached to the vessel and a drive element (17, 18) for hinging the frame between a first position (I) substantially overlying the deck and a second (II), upright position, a connector (21) being provided at an upper end of the lifting frame (3), the lifting frame (3) being an A-type frame with two legs (4. 5), each leg provided with a respective hinge connection (6, 7) on each side of the vessel, and a pipe-lay frame (20), which connector (21) is attachable to an upper end of said pipe-lay frame (20), which pipe-lay frame can be attached through said connector (21) to the lifting frame in its first position, the pipe-lay frame (20) upon connection being placed substantially horizontally on the deck, whereafter the pipe-lay frame can be uprighted to a predetermined angle by placing the lifting frame in its second position.

2. Installation vessel (1) according to claim 1, wherein the lifting frame (3) comprises at least one guide arm, (11, 12) with a lower end connected to a hinge (13, 14) located at a distance from the hinge connection (6, 7) of an arm (4, 5) of the lifting frame, towards a bow of the vessel, and with an upper end that is displaceably received in a slide member (15, 16) connected to the arm (4, 5) of the lifting frame (3).

3. Installation vessel (1) according to claim 1 or 2, wherein the pipe-lay frame (20) is at its lower end (22) provided with a coupling member for attaching to the deck (2).

4. Installation vessel (1) according to claim 3, wherein the coupling member is a hinging coupling member, located near the hinge connection (6, 7) of the lifting frame (3).

5. Installation vessel (1) according to claim 1, wherein the connection between the pipe lay frame (20) and the lifting frame (3) is not disconnectable.

6. Installation vessel (1) according to any of the preceding claims, wherein the lifting frame (3) cannot rotate around a vertical axis, the vessel comprising dynamical positioning means.

7. Installation vessel (1) according to any of the preceding claims, comprising a storage compartment (25, 26) for pipe sections.

## Patentansprüche

1. Installationsschiff (1), umfassend ein Deck (2) mit einem Anheberahmen (3) am Heck, der sich mit einem unteren Ende in einer Gelenkverbindung (6, 7) befindet, das an dem Schiff schwenkbar angebracht ist, und einem Antriebselement (17, 18) zum Schwenken des Rahmens zwischen einer ersten Position (I), die im Wesentlichen über dem Deck liegt, und einer zweiten (II), aufrechten Position, wobei ein Verbindungsteil (21) am oberen Ende des Anheberahmens (3) bereitgestellt ist, wobei der Anheberahmen (3) ein A-förmiger Rahmen mit zwei Schenkeln (4, 5) ist, wobei jeder Schenkel mit einer jeweiligen Gelenkverbindung (6, 7) auf jeder Seite des Schiffs versehen ist, und ein Rohrleitungsverlegungsrahmen (20), wobei das Verbindungsteil (21) an einem oberen Ende des Rohrleitungsverlegungsrahmens (20) anbringbar ist, wobei der Rohrleitungsverlegungsrahmen (20) über das Verbindungsteil (21) an dem Anheberahmen in seiner ersten Position angebracht werden kann, wobei der Rohrleitungsverlegungsrahmen (20) bei Verbindung im Wesentlichen horizontal auf dem Deck angeordnet ist, wonach der Rohrleitungsverlegungsrahmen zu einem vorher festgelegten Winkel aufgerichtet werden kann, indem der Anheberahmen in seine zweite Position gebracht wird.

2. Installationsschiff (1) nach Anspruch 1, bei dem der Anheberahmen (3) wenigstens einen Führungsarm (11, 12) mit einem unteren Ende, das mit einem Gelenk (13, 14) verbunden ist, das sich in einem Abstand von der Gelenkverbindung (6, 7) eines Arms (4, 5) des Anheberahmens zu einem Bug des Schiffs hin befindet, und einem oberen Ende, das versetzbar in einem Gleitelement (15, 16) aufgenommen ist, das mit dem Arm (4, 5) des Anheberahmens (3) verbunden ist.

3. Installationsschiff (1) nach Anspruch 1 oder 2, bei dem der Rohrleitungsverlegerahmen (20) an seinem unteren Ende (22) mit einem Kopplungselement zum Anbringen am Deck (2) versehen ist.

4. Installationsschiff (1) nach Anspruch 3, bei dem das Kopplungselement ein Gelenk-Kopplungselement ist, das sich nahe der Gelenkverbindung (6, 7) des Anheberahmens (3) befindet.

5. Installationsschiff (1) nach Anspruch 1, bei dem die Verbindung zwischen dem Rohrleitungsverlegerahmen (20) und dem Anheberahmen (3) nicht trennbar ist.

6. Installationsschiff (1) nach einem der vorhergehenden Ansprüche, bei dem der Anheberahmen (3) sich nicht um eine vertikale Achse drehen kann und das Schiff dynamische Positioniermittel umfasst.

7. Installationsschiff (1) nach einem der vorhergehenden Ansprüche, das ein Aufbewahrungsabteil (25, 26) für Rohrleitungsabschnitte umfasst.

## Revendications

1. Navire de pose (1) comprenant un pont (2) ayant au niveau de l'arrière un cadre de levage (3) dont une extrémité inférieure est dans une liaison articulée (6, 7) fixée de façon articulée au navire et un élément d'entraînement (17, 18) pour articuler le cadre entre une première position (I) sensiblement sus-jacente au pont et une seconde position (II) verticale, un connecteur (21) étant prévu à une extrémité supérieure du cadre de levage (3), le cadre de levage (3) étant un cadre de type A avec deux montants (4, 5), chaque montant étant doté d'une liaison articulée respective (6, 7) sur chaque côté du navire, et un cadre de pose de conduites (20), lequel connecteur (21) peut être fixé à une extrémité supérieure dudit cadre de pose de conduites (20), lequel cadre de pose de conduites peut être fixé au cadre de levage dans sa première position, le cadre de pose de conduites (20) lors de la liaison étant placé de façon sensiblement horizontale sur le pont, après quoi le cadre de pose de conduites peut être redressé à un angle prédéterminé en plaçant le cadre de levage dans sa seconde position.

2. Navire de pose (1) selon la revendication 1, dans lequel le cadre de levage (3) comprend au moins un bras de guidage (11, 12) ayant une extrémité inférieure connectée à une articulation (13, 14) située à une distance de la liaison articulée (6, 7) d'un bras (4, 5) du cadre de levage, vers une étrave du navire, et ayant une extrémité supérieure qui est reçue de façon déplaçable dans un élément coulissant (15, 16) relié au bras (4, 5) du cadre de levage (3).

3. Navire de pose (1) selon la revendication 1 ou 2, dans lequel le cadre de pose de conduites (20) est à son extrémité inférieure (22) doté d'un élément de couplage pour fixation au pont (2).

4. Navire de pose (1) selon la revendication 3, dans lequel l'élément de couplage est un élément de couplage articulé, situé à proximité de la liaison articulée (6, 7) du cadre de levage (3).

5. Navire de pose (1) selon la revendication 1, dans lequel la liaison entre le cadre de pose de conduites (20) et le cadre de levage (3) n'est pas déconnectable.

6. Navire de pose (1) selon l'une quelconque des revendications précédentes, dans lequel le cadre de levage (3) ne peut pas tourner autour d'un axe vertical, le navire comprenant des moyens de positionnement dynamiques.

7. Navire de pose (1) selon l'une quelconque des revendications précédentes, comprenant un compartiment de stockage (25, 26) pour les tronçons de conduites.
